Europäisches Patentamt

European Patent Office

Office européen des brevets

(19)

(11) **EP 0 786 877 B1**

(12) **FASCICULE DE BREVET EUROPEEN**

(45) Date de publication et mention
de la délivrance du brevet:
**01.12.1999 Bulletin 1999/48**

(51) Int Cl.⁶: **H04B 10/18**

(21) Numéro de dépôt: **97400106.7**

(22) Date de dépôt: **20.01.1997**

(54) **Méthode et dispositif de régénération en ligne d'un signal transmis par solitons multiplexés en longueur d'onde via la modulation synchrone et système de télécommunications optiques utilisant la méthode**

Verfahren und Anordnung zum Inline-Regenerieren eines übertragenen Wellenlängenmultiplexsignals durch synchrone Modulation und optisches Übertragungssystem welches dieses Verfahren benutzt

Method and apparatus for line regeneration of a signal transmitted by synchronous modulation of wavelength division multiplexed solitons, and an optical telecommunications system using the method

(84) Etats contractants désignés:
**AT BE CH DE DK ES FR GB IT LI NL SE**

(30) Priorité: **23.01.1996 FR 9600732**

(43) Date de publication de la demande:
**30.07.1997 Bulletin 1997/31**

(73) Titulaire: **ALCATEL**
**75008 Paris (FR)**

(72) Inventeurs:
• **Chesnoy, José**
**75014 Paris (FR)**
• **Desurvire, Emmanuel**
**91680 Bruyeres le Chatel (FR)**
• **Leclerc, Olivier**
**91420 Saint-Michel-sur-Orge (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
• **ELECTRONICS LETTERS, vol. 29, no. 9, 29 Avril 1993, pages 729-730, XP000351871 NAKAZAWA M: "EXPERIMENTAL DEMONSTRATION OF SOLITON DATA TRANSMISSION OVER UNLIMITED DISTANCES WITH SOLITON CONTROL IN TIME AND FREQUENCY DOMAINS"**
• **ELECTRONICS LETTERS, vol. 28, no. 14, 2 Juillet 1992, pages 1350-1352, XP000307842 JINNO M ET AL: "ALL-OPTICAL REGENERATOR BASED ON NONLINEAR FIBRE SAGNAC INTERFEROMETER"**
• **ELECTRONICS LETTERS, vol. 30, no. 21, 13 Octobre 1994, page 1777/1778 XP000476409 NAKAZAWA M ET AL: "80GBIT/S SOLITON DATA TRANSMISSION OVER 500KM WITH UNEQUAL AMPLITUDE SOLTIONS FOR TIMING CLOCK EXTRACTION"**

## Description

L'invention concerne le domaine de télécommunications sur fibre optique, et plus particulièrement des télécommunications sur des longues distances. Il est connu, pour des liaisons très longues distances à fibre optique, d'utiliser un signal de type dit "soliton" ayant des propriétés spectrales particulières qui permettent au signal de se propager sur la fibre dispersive sans dispersion chromatique appréciable, c'est-à-dire que l'on utilise la dépendance de l'indice de réfraction sur l'intensité du signal pour contrebalancer la dispersion chromatique ou vice-versa. La forme spectrale du signal est préservée malgré les effets de la distance de propagation, qui se résument ainsi principalement à des pertes de ligne. Ces pertes de ligne peuvent être compensées par une amplification optique en ligne, par exemple à l'aide d'un amplificateur à fibre dopée Erbium, ou "EDFA" en anglais.

Pour la transmission par solitons avec amplification en ligne (EDFA) les problèmes qui restent à résoudre sont connus :

1) la gigue Gordon-Haus qui cause une incertitude temporelle de l'arrivée des bits du signal ;
2) l'accumulation de bruit provenant de l'amplification de l'émission spontanée dans les amplificateurs optiques.

Différentes solutions ont été proposées et décrites dans les documents suivants qui sont expressément incorporés à la présente demande en tant que descriptions de l'art antérieur :

D1 = EP-A1 576 208 de Gordon, J.P. et Mollenauer, L.F. "Soliton system having sliding-frequency guiding filters". Selon l'enseignement de ce document, l'insertion d'une pluralité de filtres dont la fréquence centrale varie le long d'une liaison de transmission de signaux de type soliton, permet l'amplification périodique des solitons sans l'amplification exponentielle du bruit d'émission spontanée. Il n'y a pas de régénération des solitons dans ce système. Selon le document D1, un avantage d'un tel système est sa compatibilité avec des transmissions multi-longueur d'ondes (WDM en anglais). Ce document cite également l'enseignement du document D2 ci-après, mais note que la technique de D2 serait incompatible avec WDM (voir p.2, lignes 21-24.).

La modulation synchrone pour la régénération des solitons en ligne est enseignée par le document D2 = Nakazawa et al., (1991) : "10 Gbit/s Soliton Data Transmission over One Million Kilometres". Elect. Lett. $\underline{27}$(14) p. 1270-72, 4 July 1991.

Ce document D2 enseigne l'utilisation d'un modulateur optique en $LiNbO_3$ pour effectuer la modulation synchrone des solitons, avec un signal d'horloge généré à partir de la même horloge utilisée pour la source de solitons. La simulation d'une liaison très longue distance a été faite sur une boucle de fibre de 500 km, avec un amplificateur optique à fibre dopée Erbium tous les 50 km et une régénération à chaque tour de la boucle. A cause de la dispersion de la fibre de transmission soliton, qui varie entre -0.7 à -2.2 ps/km/nm, avec un moyen de -1.5 ps/km/nm, le temps de trajet pour faire un tour de la boucle dépend de la longueur d'onde du soliton. C'est pour cette raison qu'un tel système n'est pas approprié pour la transmission WDM, comme nous l'a souligné D1.

D3 = Mollenauer, L.F. et al., (1991) : "Wavelength Division Multiplexing with Solitons in Ultra-Long Distance Transmission Using Lumped Amplifiers," Journal of Lightwave Tech. $\underline{9}$(3), p. 362-367, March 1991. Ce document propose un système de transmission de solitons WDM avec amplification optique périodique, pour des distances transocéaniques (9000 km). L'enseignement de ce document concerne principalement les collisions entre des solitons ayant des longueurs d'onde différentes. Ce document donne des valeurs typiques de différents paramètres pour une telle liaison.

Par exemple, la valeur de la distribution de la dispersion chromatique des fibres à dispersion décalée telles que trouvées dans le commerce est de l'ordre de $\pm$0.5ps/nm/km. En outre, sur la page 363, colonne de droite, dernier paragraphe, D3 parle de la gestion des valeurs de dispersion des tronçons de fibre qui composent la liaison.

Sur la page 365, colonne de droite, premier paragraphe, un exemple pratique d'une liaison est donné, avec des paramètres chiffrés. La distance $L_{pert}$ correspond à une distance moyenne entre perturbations des solitons, dues aux collisions ou aux variations de la dispersion entre tronçons successifs, est de 40 km, dispersion moyenne D = 1 ps/km/nm ; avec quatre canaux WDM de 4 Gbit/s, espacés de 1.2 nm maximum ; les solitons ayant une largeur temporelle de $\tau$ = 50 ps, avec une séparation minimale de $5\tau$ ; et la période soliton est de l'ordre de $z_0$ = 930 km. La gigue introduite par les interactions entre des canaux adjacents est de l'ordre de $\pm$ 7.5 ps ; pour un système de quatre canaux, le cas le plus défavorable pourrait introduire une gigue de $\pm$ 22.5 ps.

Toutefois, dans tous les cas considérés par le document D3, la synchronicité de l'arrivée des solitons à la fin de la liaison n'est ni prévue, ni requise.

D'autres documents sont utiles pour une meilleure compréhension de la présente invention, et seront introduits brièvement avec une appréciation de leurs apports dans ce but. Ces documents sont également expressément incorporés à la présente demande en tant que descriptions de l'art antérieur :

D4 = Nakazawa, M., et al. (1995), : "Optical soliton communication in a positively and negativley dispersion allocated optical fiber transmission line," Electr. Lett. $\underline{31}$(3), pp. 216-217, 2 feb. 1995. Ce document traite plus particulièrement de la gestion des dispersions dans une liaison optique de transmissions par solitons, comportant une pluralité de tronçons de fibre avec des dispersions différentes. L'enseignement de ce document concerne le fait que seule la moyenne de la dispersion, intégrée sur la longueur de la liaison, doit être négative pour conserver les propriétés des solitons : ainsi, des régions de dispersion positive peuvent être tolérées si le bilan total intégré reste celui d'une dispersion négative.

D5 = Kumar, S. et al., (1995) : "Dispersion managements on soliton transmissino in fibers with lumped amplifiers", Proc. Int'l. Symposium on physics and applications of Optical Solitons in fibers, Kyoto, Japan, pp. 1-12, Nov. 14-17, 1995. Le chapitre ultime de ce papier discute les différents aspects de la gestion de dispersions dans des systèmes WDM non régénérés.

Les documents D3 et D5 développent les relations entre les distances entre des amplificateurs optiques localisés et la longueur moyenne de la liaison entre collisions de solitons de canaux différents, et D5 enseigne une méthode de sélection de fibres ayant des valeurs de dispersion négative différentes, de manière à garder les effets non-linéaires de dispersion en fonction de l'amplitude des signaux lumineux quasi-stationnaires le long de la liaison.

Le document D6 = Electronics Letters, vol. 29, no.9, 29-04-93 Stevenage, GB, pp. 729-730, Nakazawa et al., "Experimental demonstration of soliton data transmission over unlimited distances with soliton control in time and frequency domains" décrit un système similaire à celui du D2, sauf qu'il y récupération d'horloge local au niveau du régénérateur, permettant de s'affranchir de la ligne à retard variable nécessaire dans la demonstration de D2. Toutefois, l'utilisation d'une récupération d'horloge sur un signal WDM n'est pas explicitée, et elle est probablement impossible, dans le cas d'un signal WDM.

Les systèmes proposes par ces documents de l'art antérieur sont insatisfaisants car il n'y en a aucun qui permet d'utiliser plusieurs canaux multiplexés en longueur d'onde (WDM) avec un système de régénération synchrone de solitons. Tous les documents cités apportent quelque chose qui pourrait être utile dans un tel système, mais la plupart d'entre eux constate qu'il n'y a point de synchronicité entre les canaux, et donc la question de la régénération synchrone est, dans cette optique, sans objet. Pour cette raison, il n'apparaît pas possible, d'après les préjugés bien établis de l'homme de l'art, d'envisager des liaisons optiques WDM très haut débit, très longues distances, via solitons multiplexés en longueur d'onde et avec régénération pour éliminer la gigue Gordon-Haus et pour garder la forme spectrale optimale des solitons.

L'invention a pour but de pallier les problèmes de l'art antérieur.

A ces fins, l'invention propose une méthode de régénération en ligne de signaux optiques se propageant sur une fibre optique entre un émetteur et un récepteur, lesdits signaux ayant la forme d'un train de bits représentés par des solitons qui sont caractérisés notamment par une longueur d'onde de propagation et un rythme de bits , comprenant les étapes suivantes :

- l'amplification dudit signal optique à régénérer afin de compenser des pertes éventuelles ;
- le prélèvement d'une partie du signal optique à régénérer via un coupleur optique couplé à ladite fibre ;
- la récupération d'un signal d'horloge à partir dudit train de bits dans ladite partie prélevée ;
- l'application dudit signal d'horloge, via un déphasage approprié, à un modulateur optique afin d'obtenir la modulation synchrone dudit signal optique à régénérer ;
- le filtrage spectral des solitons dudit signal optique à régénérer après ladite modulation synchrone ;

**caractérisée en ce que**

lesdits solitons caractérisés par une pluralité **m** de longueurs d'onde de propagation, qui se trouvent dans une bande spectrale ayant des extrémités $\lambda_1$ et $\lambda_n$, respectivement la plus petite et la plus grande des longueurs d'onde de ladite pluralité ;

ladite récupération d'un signal d'horloge s'effectue à partir d'une longueur d'onde $\lambda_k$ comprise entre les longueurs d'onde $\lambda_1$ et $\lambda_n$ ; tel que $\tau_g(\lambda_k)Z_R = kT$ **et en ce que**

ladite régénération est effectuée à une distance $Z_R$ entre ledit émetteur et ledit modulateur optique, ou entre deux modulateurs successifs, ladite distance $Z_R$ étant choisie telle que son produit avec la différence de temps d'arrivée $\delta\tau_g = \tau_g(\lambda_n) - \tau_g(\lambda_1)$ satisfasse la condition :

$$\left[ kT - T/4 \right] < \delta\tau_g \ Z_R < \left[ kT + T/4 \right]$$

où k est entier et T est le temps bit (pour $Z_R$ en km, $\delta\tau_g$ en ps.km$^{-1}$).

Selon une variante avantageuse, ladite distance $Z_R$ est choisie telle que son produit avec la différence de

temps de groupe $\delta\tau_g = \tau_g(\lambda_n)-\tau_g(\lambda_1)$ satisfasse la condition :

$$\left[kT - T\!\!\big/\!\!N\right] < \delta\tau_g \; Z_R \; < \; \left[kT + T\!\!\big/\!\!N\right]$$

où $N > 4$.

Selon une variante, la méthode porte sur des signaux optiques soliton WDM ayant une pluralité **m** de canaux WDM choisis parmi **n** canaux ($c_1, ... c_n$) ayant les longueurs d'onde respectives $\lambda_1, \lambda_2, ... \lambda_n$, avec $\lambda_j - \lambda_{j-1} = \Delta\lambda$ , pour $\forall\, j > 0$ , j entier, et

$$\lambda_1\text{-}\lambda_0 = \frac{\Delta\lambda}{2} = \sqrt{\frac{T_{bit}}{4\, Z_R\, D'_0}}\;,$$

où $\lambda_0$ est la longueur d'onde de dispersion nulle.

Selon une caractéristique avantageuse, ladite fibre optique comprend une pluralité de tronçons de fibre, chaque tronçon étant caractérisé en partie par une longueur et par une valeur de la dispersion chromatique, et la méthode de l'invention comprend en outre la gestion de dispersion desdits tronçons de fibre.

Selon une variante, l'invention concerne également un système de transmission optique de signaux ayant la forme d'un train de bits représentés par des solitons qui sont caractérisés notamment par une longueur d'onde de propagation et un rythme de bits , ledit système comprenant au moins un émetteur et un récepteur ainsi qu'une fibre optique reliant les deux ; ledit système comprenant en outre au moins un dispositif de régénération optique comprenant un circuit de récupération d'horloge et un modulateur optique ainsi qu'un filtre spectral ; ledit système étant **caractérisé en ce que** :

ledit émetteur émet des solitons sur une pluralité de longueurs d'onde se trouvent dans une bande spectrale ayant des extrémités $\lambda_1$ et $\lambda_n$, respectivement la plus petite et la plus grande des longueurs d'onde de ladite pluralité ; lesdites longueurs d'onde différentes étant associées respectivement à des temps de groupe différents $\tau_g(\lambda_1),... \tau_g(\lambda_n)$, ces temps de groupe étant caractérisés par une différence de temps de groupe $\delta\tau_g=\tau_g(\lambda_n)-\tau_g(\lambda_1)$ ; **et en ce que** ledit dispositif de régénération optique est disposé à une distance $Z_R$ entre ledit émetteur et ledit modulateur optique, ou entre deux modulateurs successifs, ladite distance $Z_R$ étant choisie telle que son produit avec la différence de temps de groupe $\delta\tau_g=\tau_g(\lambda_n)-\tau_g(\lambda_1)$ satisfasse la condition :

$$\left[kT - T\!\!\big/\!\!4\right] < \delta\tau_g \; Z_R \; < \; \left[kT + T\!\!\big/\!\!4\right]$$

où k est entier et T est le temps bit ( pour $Z_R$ en km, $\delta\tau_g$ en ps.km$^{-1}$).

Selon une caractéristique, ladite distance $Z_R$ est choisie telle que son produit avec la différence de temps de groupe $\delta\tau_g = \tau_g(\lambda_n)-\tau_g(\lambda_1)$ satisfasse la condition :

$$\left[kT - T\!\!\big/\!\!N\right] < \delta\tau_g \; Z_R \; < \; \left[kT + T\!\!\big/\!\!N\right]$$

où $N > 4$ .

Selon une autre variante avantageuse, ledit système WDM utilise une pluralité **m** de canaux WDM choisis parmi **n** canaux ($c_1, ... c_n$) ayant les longueurs d'onde respectives $\lambda_1, \lambda_2, ... \lambda_n$, avec $\lambda_j - \lambda_{j-1} = \Delta\lambda$ , $\forall\, j > 0$, j entier, et

$$\lambda_1\text{-}\lambda_0 = \frac{\Delta\lambda}{2} = \sqrt{\frac{T_{bit}}{4\, Z_R\, D'_0}}\;,$$

où $\lambda_0$ est la longueur d'onde de dispersion nulle.

Selon une caractéristique, ledit système comprend une pluralité de tronçons de fibre, chaque tronçon étant caractérisé en partie par une longueur et par une valeur de la dispersion chromatique, et la méthode de l'invention comprend en outre la gestion de dispersion desdits tronçons de fibre.

Selon une autre réalisation, l'invention propose un dispositif de régénération de solitons comprenant un circuit de récupération d'horloge RH synchronisé au rythme bit d'un signal soliton sur un canal de transmission via un coupleur optique ; des moyens d'accord de phase Φ , par exemple une ligne à retard optique ; et un modulateur d'intensité et/ ou de phase piloté par le signal d'horloge RF

ledit dispositif étant **caractérisé en ce qu'**il comprend en outre un filtre optique guidant cannelé qui sert à remettre les impulsions solitons d'une pluralité de longueurs d'onde dans la même position temporelle.

L'invention sera mieux comprise, avec ses différentes caractéristiques et avantages, à la lumière de la description détaillée qui suit, avec ses dessins annexés, dont :

- la figure 1, qui montre schématiquement un exemple d'un système de transmissions optiques sur fibre optique, selon une architecture connue de l'art antérieur, et apte à être utilisé dans le dispositif de l'invention ;
- la figure 2, qui montre schématiquement un dispositif de modulation synchrone de solitons, connu de l'art antérieur et apte à être utilisé dans le dispositif de l'invention ;
- la figure 3, qui montre schématiquement un abaque de la distance entre des dispositifs de régénération de solitons sur une liaison longue- distances, et la séparation entre canaux dans un système multi-longueur d'onde (WDM) de transmissions par solitons ;
- la figure 4, qui montre schématiquement un exemple d'un espacement préféré des canaux WDM dans un système de télécommunications selon l'invention ;
- la figure 5, qui montre les résultats de simulations de la facteur de qualité Q en fonction de la longueur de la liaison, mettant en avant les avantages procurés par l'invention.

Les dessins sont donnés à titre d'exemples non limitatifs, illustratifs des principes de l'invention et de quelques variantes. Sur toutes les figures, les mêmes repères se réfèrent aux mêmes éléments, et l'échelle n'est pas toujours respectée pour des raisons de clarté.

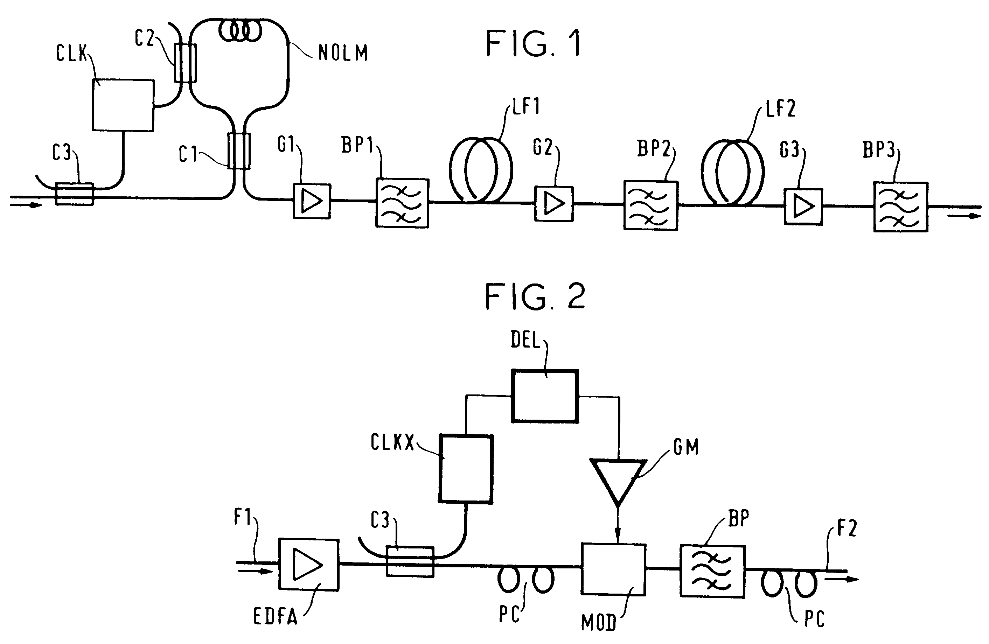

La figure 1 montre schématiquement un exemple d'un système de transmissions optiques sur fibre optique, selon une architecture connue de l'art antérieur, et apte à être utilisé dans le dispositif de l'invention. Le système montré sur cette figure comprend un dispositif de régénération (C3, CLK, C2, C1, NOLM) ainsi qu'une pluralité d'amplificateurs optiques de ligne (G1, G2, G3...) et une pluralité de filtres guidants (BP1, BP2, BP3....). Les filtres guidants compriment la largeur spectrale des solitons, mais enlèvent de l'énergie des solitons en se faisant. C'est pourquoi le gain des amplificateurs en ligne doit être supérieur aux pertes de ligne subies par les solitons sur les fibres optiques (LF1, LF2, ...) entre les amplificateurs (G1, G2, G3, ...). En réduisant la largeur spectrale des solitons, la gigue temporelle est aussi réduite par les filtres guidants, tel qu'expliqué dans le document D1.

Dans le régénérateur de solitons et dans le système de la figure 1, connu par exemple par D1, les filtres guidants sont des filtres passe-bande ayant une largeur spectrale légèrement inférieure à celle des solitons. Dans le régénérateur de solitons et dans le système de l'invention, les filtres guidants sont des filtres cannelés, c'est à dire des filtres passe-bande qui laisse passer une pluralité des bandes étroites ayant des fréquences centrales différentes, correspondant aux longueurs d'ondes des différents canaux du système WDM multiplexé en longueur d'onde.

Le document D2 décrit l'utilisation d'un modulateur optique en $LiNbO_3$ pour effectuer la modulation synchrone des solitons, tel que montré schématiquement sur la figure 2. Le problème avec cette solution est que le débit de signaux à régénérer ne pourra dépasser les 20 à 30 Gbit/s (10 Gbit/s dans le document D2). Le modulateur en $LiNbO_3$ est commandé par un signal électronique de commande généré dans un circuit d'horloge à partir du signal de solitons en ligne. Les moyens de récupération d'horloge comprennent un coupleur optique C3 pour l'extraction d'une partie du signal optique qui se propage entre l'entrée F1 et la sortie F2 ; un circuit d'extraction d'horloge CLKX, une ligne à retard pour fournir un délai DEL, et un amplificateur GM pour fournir la puissance de commande nécessaire pour faire fonctionner le modulateur MOD en $LiNbO_3$. Accessoirement, la figure 2 montre un amplificateur optique d'entrée (EDFA) pour pallier les pertes d'insertion du circuit de régénération ; des dispositifs de contrôle de polarisation (PC) biréfringents ; et un filtre passe-bande BP pour resserrer la distribution spectrale de l'énergie des solitons. Comme dans le cas de la figure 1, le système connu comprend un filtre passe-bande à bande étroite, ayant une largeur spectrale légèrement inférieure à celle des solitons. Dans le régénérateur de solitons et dans le système de l'invention, le filtre guidant est un filtre cannelé.

Certains de ces accessoires peuvent se retrouver dans différentes réalisations préférées de l'invention telles que décrites ci-après.

Pour permettre la modulation synchrone simultanée d'une pluralité de signaux soliton multiplexés en longueur d'onde, donc ayant des longueurs d'onde différentes, des vitesses de groupe différentes, et donc des temps de trajet différents, il faut trouver un moyen de synchroniser ces signaux. Selon la méthode de l'invention, ceci peut être obtenu en choisissant la longueur du chemin optique parcouru par les signaux en fonction de leurs longueurs d'onde, de manière à ce que les signaux soit synchronisés, au moins approximativement, à l'endroit même où est positionné le modulateur.

En effet, les différents canaux, bien que désynchronisés par la dispersion chromatique lors de leur propagation sur des fibres, comportent tous des signaux périodiques, avec des rythmes bit identiques à l'émission. Il en résulte des "collisions" entre des solitons de canaux voisins le long de la ligne de transmission (voir description théorique dans D3 = Mollenauer et al, 1991). De ce fait, et tenant compte des décalages entre les différents canaux, tous les canaux se retrouveront synchronisés entre eux à certains points espacés régulièrement le long de la ligne. Il suffit de calculer cet espacement et de placer les régénérateurs à l'un de ces points de synchronisation, afin d'effectuer la modulation synchrone avec un seul modulateur et sans démultiplexage. Deux cas sont à considérer : celle où la pente de dispersion ($D'_0 =(dD/d\lambda)_{\lambda_0}$) est non nulle, et celui où celle-ci est nulle.

Par exemple, pour deux canaux transmis à $\lambda_1$ et $\lambda_2$, avec $\lambda_0$ la longueur d'onde de zéro dispersion, et $\Delta\lambda=\lambda_2-\lambda_1$, la différence de temps d'arrivée au modulateur résulte de la différence de temps de groupe $\delta\tau_g=\tau_g(\lambda_2)-\tau_g(\lambda_1)$,

$$\delta\tau_g = \frac{1}{2}\left(\frac{dD}{d\lambda}\right)_{\lambda_0}\left\{(\lambda_2-\lambda_0)^2 -(\lambda_1-\lambda_0)^2\right\} = \frac{1}{2}\left(\frac{dD}{d\lambda}\right)_{\lambda_0}\left\{\Delta\lambda^2 +2\Delta\lambda(\lambda_1-\lambda_0)\right\} \ (ps.km^{-1})$$

dans le cas $D'_0 \neq 0$, et $\delta\tau_g = (\lambda_2 - \lambda_1)D(\lambda_1)$ dans le cas $D'(\lambda) = 0$.

La méthode de l'invention propose donc d'utiliser un seul modulateur synchrone pour tous les canaux WDM, en choisissant soigneusement la distance entre l'émission et le modulateur, ou entre modulateurs successifs, par rapport a l'espacement de canaux et la dispersion chromatique de la fibre, afin de retrouver tous les canaux synchronisés lors du passage dans le modulateur. La distance $Z_R$ entre modulateurs sera choisie telle que la différence de temps de groupe $\delta\tau_g$ satisfasse la condition

$$\left[kT -\frac{T}{4}\right] < \delta\tau_g\ Z_R < \left[kT +\frac{T}{4}\right]$$

où k est entier et T est le temps bit ( pour $Z_R$ en km, $\delta\tau_g$ en ps.km$^{-1}$). Cette contraint permet d'obtenir une synchronisation approximative entre les deux canaux WDM ayant les longueurs d'onde $\lambda_1$ et $\lambda_2$. Une synchronisation meilleure peut être obtenue en réduisant la largeur de la fenêtre temporelle, jusqu'à obtenir le degré de synchronisation voulue.

Ainsi, des résultats meilleurs seront obtenus quand la différence maximum de temps de groupe $\delta\tau_g$, pour un modulateur positionné à une distance $Z_R$ est égale à un multiple entier k du temps bit T plus ou moins une plus petite fraction du temps bit,

$$\left[kT -\frac{T}{N}\right] < \delta\tau_g\ Z_R < \left[kT +\frac{T}{N}\right]$$

où $N > 4$ , et pour $Z_R$ en km, $\delta\tau_g$ en ps.km$^{-1}$.

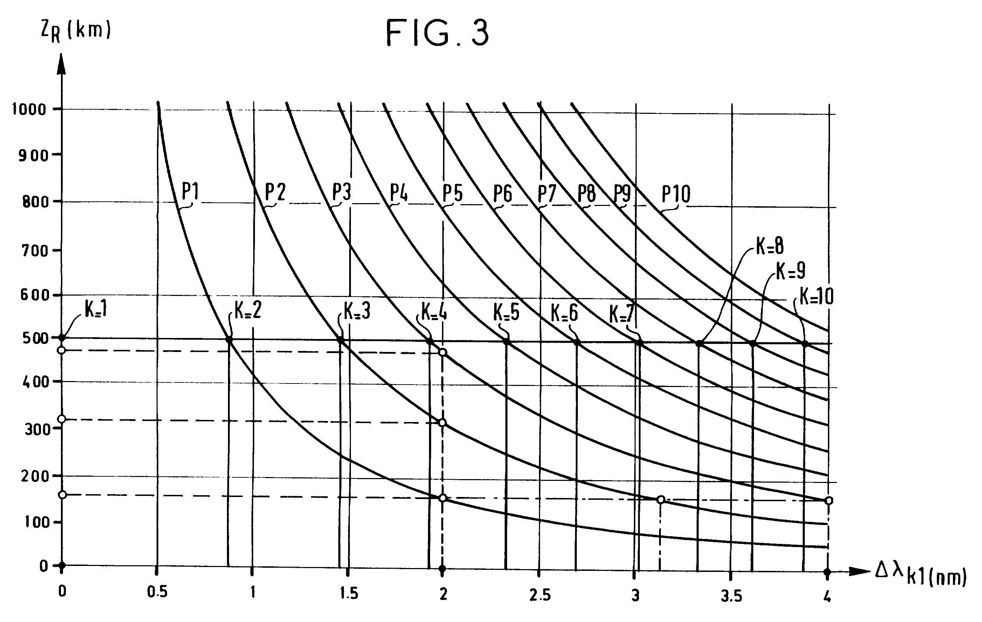

La figure 3 montre schématiquement un abaque de la distance $Z_R$ entre des dispositifs de régénération de solitons sur une liaison longue- distances, et la séparation $\Delta\lambda_{k1}$ entre deux canaux ayant des longueurs d'onde $\lambda_K$ et $\lambda_1$, où $\lambda_1$ est la longueur d'onde la plus petite de la bande WDM dans un système multi-longueur d'onde de transmissions par solitons (cas où $D'_0 \neq 0$). Les courbes sur cet abaque sont identifiées sur le côté droit de la figure par un paramètre **p**, qui représente le nombre de périodes de temps bit qui sépare les deux signaux à une distance $Z_R$ en km pour une différence de longueur d'onde $\Delta\lambda_{k1}$ en nm.

Pour donner quelques exemples de la lecture de cet abaque, des traits discontinus peuvent guider l'oeil du lecteur. Par exemple, pour une séparation de 2 nm entre deux canaux, une synchronicité peut être trouvée à une distance $Z_R = 160$ km environ, avec un glissement d'une période de temps bit entre les deux canaux, ou encore à une distance de $Z_R = 320$ km environ pour un glissement de deux périodes de temps bit entre les deux canaux, ou encore à une distance de $Z_R = 480$ km environ pour un glissement de trois périodes de temps bit entre les deux canaux.

Pour donner un autre exemple de la lecture de cet abaque, des traits continus peuvent guider l'oeil du lecteur. Par exemple, pour une distance de régénération de $Z_R = 500$ km environ, un système WDM ayant des canaux espacés en longueur d'onde selon les traits continus aura la synchronicité entre ces signaux au niveau du régénérateur. Les longueurs d'onde dans l'exemple de la figure sont données par rapport à la longueur d'onde la plus petite $\lambda_1$, par les

différences de longueur d'onde $\Delta\lambda_{k1} = \lambda_k - \lambda_1$ qui sont approximativement :

- $\Delta\lambda_{21} = 0.85$ nm ; p = 1 ;
- $\Delta\lambda_{31} = 1.45$ nm ; p = 2 ;
- $\Delta\lambda_{41} = 1.95$ nm ; p = 3 ;
- $\Delta\lambda_{51} = 2.35$ nm ; p = 4 ;
- $\Delta\lambda_{61} = 2.65$ nm ; p = 5 ;
- $\Delta\lambda_{71} = 3.05$ nm ; p = 6 ; et cetera.

Dans la figure, nous avons montré que pour une longueur de fibre entre régénérateurs fixe $Z_R$, il est possible de synchroniser une pluralité de canaux ayant des longueurs d'onde déterminées par cette longueur $Z_R$. En revanche, pour la conception des systèmes, il serait souvent plus pratique, surtout en ce qui concerne la réalisation des filtres cannelés, un espacement régulier entre les canaux. Dans ce cas on peut écrire $\Delta\lambda_{k1}(p) = (k-1)\Delta\lambda$, avec $\Delta\lambda = \lambda_k - \lambda_{k-1}$, pour k entier et k > 1, et p = k(k-1)/2, c'est-à-dire le même espacement pour chaque paire de canaux voisins. Selon les relations déjà données ci-dessus, nous trouvons que :

$$\lambda_1 - \lambda_0 = \frac{\Delta\lambda}{2} = \sqrt{\frac{T_{bit}}{4\, Z_R\, D'_0}} \;,$$

où $\lambda_0$ est la longueur d'onde de dispersion nulle.

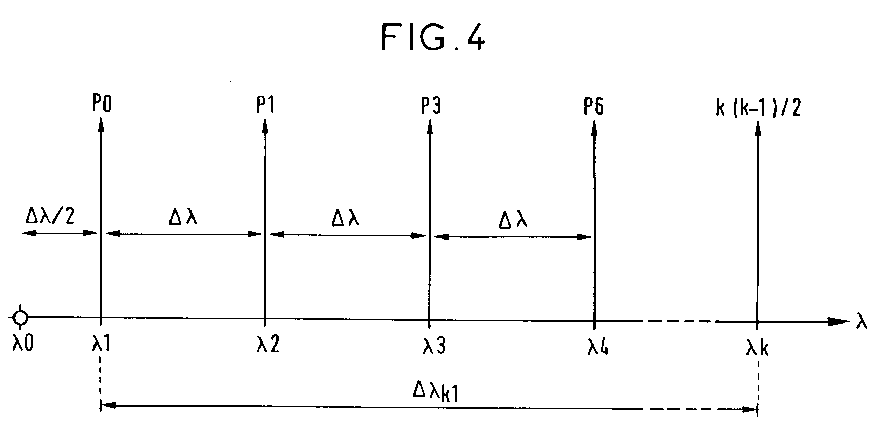

Un tel espacement régulier de canaux est montré sur la figure 4, avec la valeur du paramètre **p** qui correspond à chaque valeur de k. Notons que l'espacement du premier canal par rapport à la longueur d'onde de dispersion nulle est la moitié seulement de l'espacement des canaux suivants par rapport aux canaux voisins ; ceci ressort des relations ci-dessus (voir p.6, ligne 20 de la présente demande).

Un exemple pratique correspond, pour un système WDM synchrone avec une capacité de Nx20Gbit/s, $T_{bit}$ = 50 ps. $D'_0 = 8 \times 10^{-2}$ ps/nm²/km, et $Z_R$ = 500 km, l'espacement entre canaux serait de l'ordre de 1,1 nm.

La méthode de l'invention est parfaitement compatible avec la gestion de dispersion, telle que décrite dans les documents cités ci-dessus, ou bien tout autre système à gestion de dispersion. Il suffit de remplacer les paramètres fixes des équations exposées ci-dessus par des valeurs effectives, qui sont calculées selon les méthodes esquissées ci-après.

On considère d'abord le cas où le système comprend une pluralité de **q** tronçons de fibre $(t_1, t_2, \ldots t_k, \ldots t_q)$, chacun ayant une longueur $L_k$ et une pente de dispersion $D'_0(\lambda_{0k})$ qui est nulle pour la longueur d'onde $\lambda_{0k}$, respectivement. Dans ce cas, la dispersion effective $D_{eff}(\lambda)$ peut être calculé, ainsi que la longueur d'onde effective $\lambda_{0.eff}$ de dispersion nulle, et la pente de la dispersion $D'_{0.eff}$. Ce dernier paramètre suffira pour effectuer les calculs exposés ci-dessus pour réaliser l'invention.

$$D'_{0.eff} = \frac{\sum_{k=1}^{q} L_k\, D'(\lambda_{0k})}{\sum_{k=1}^{q} L_k}$$

avec $L = \Sigma L_k$.

Dans le cas où le nombre de tronçons est grand (q>>1), les sommes peuvent être remplacées par des intégrales ($L_k \to dz$), ce qui correspond à un profil de dispersion continu. Par ailleurs, il est possible de choisir $(L_k, D'(\lambda_{0\kappa}))$ tels que la somme du numérateur soit nulle, donnant $D'_{0,eff} = 0$ (système à pente compensée).

La synchronisation des canaux $c_k$ et $c_1$ sera obtenu à la distance $Z_R$ dans les mêmes conditions que précédemment si l'on remplace la pente de le dispersion par la pente effective de la dispersion :

$$\Delta\lambda = \sqrt{\frac{T_{bit}}{Z_R\, D'_{0,eff}}} \;.$$

Il faut noter également qu'il est tout à fait possible de choisir une partie **m** seulement des **n** longueurs d'onde prévues par les formules ci-dessus, pour former un système WDM à m canaux. Cette option peut être utilisée par exemple pour diminuer l'effet de gigue introduit par des collisions entre solitons le long de la liaison. Il peut être aussi avantageux pour réduire l'espacement entre régénérateurs.

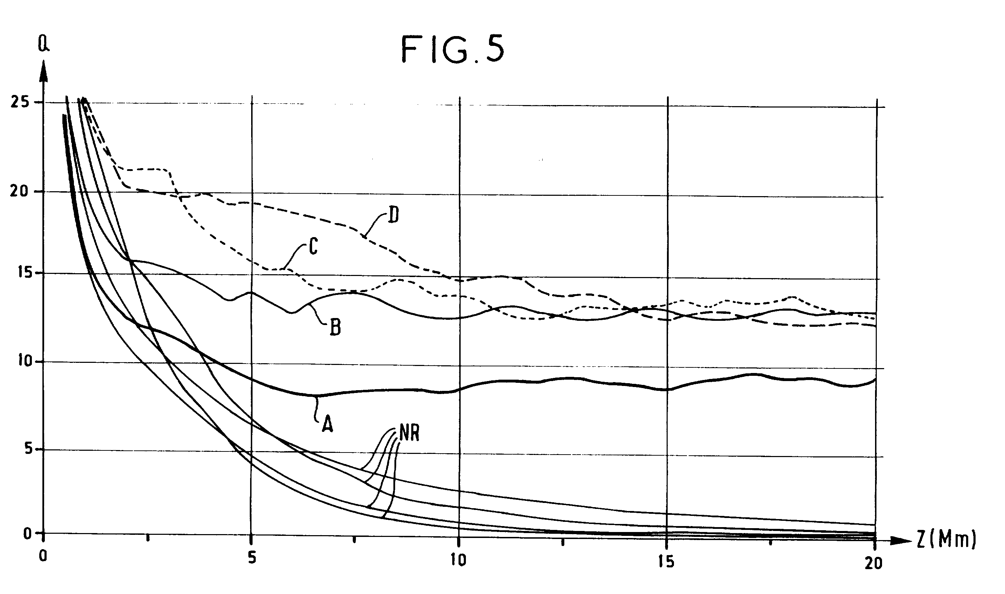

La figure 5 montre les résultats des simulations du facteur de qualité en fonction de la distance, pour un système WDM conçu selon les règles exposées ci-dessus. Les paramètres choisis pour effectuer les calculs ont été les suivants : quatre canaux de 10 Gbit/s chacun pour une liaison WDM $4 \times 10^7$ b/s, avec une modulation synchrone d'amplitude des solitons, et un filtrage à l'aide d'un filtre cannelé. Les distances entre amplificateurs, filtres, et modulateurs sont fixées respectivement à $Z_a = 30$ km, $Z_f = 4Z_a = 120$ km, et $z_{Rmin} = 4 Z_f = 480$ km. Le filtre cannelé est du type Fabry Perot, avec $\Delta\lambda = 1$ nm , avec la forme de la courbe de transmission de bande à optimiser. D'autres paramètres sont fixés comme suit :

$D'_0 = 6.95 \times 10^{-2}$ ps/nm²/km, et $Z_R = 720$ km $= 3Z_{Rmin}/2$. D'autre part, $\lambda_0 = 1.5528$ nm, $D''_0 \approx 0$ , et $A_{eff} = 50$ µm² est la surface effective, avec les pertes de fibre $\alpha = 0.20$ dB/km, et $\eta_{sp}/\eta_{in} = 2$ (facteur de l'émission spontanée par rapport aux pertes de couplage d'entrée des amplificateurs), la largeur des impulsions solitons $\Delta T = 20$ ps, et avec une profondeur de modulation de 10 dB.

Les canaux A,B,C,D correspondent aux longueurs d'onde décrites par les paramètres (k,p) = (3,3), (4,6), (6,15), et (7,21). En longueurs physiques, ceci donne $\lambda_A = 1,555.3$ nm ($\Delta\lambda_{31} = 2.5$ nm), $\lambda_B = 1,556.3$ nm, ($\Delta\lambda_{41} = 3.5$ nm), $\lambda_c = 1,558.3$ nm ($\Delta\lambda_{61} = 5.5$ nm), et $\lambda_D = 1,559.1$ nm ($\Delta\lambda_{71} = 6.5$ nm), respectivement. Les solitons sont codés pour la simulation avec une séquence pseudo-aléatoire de $2^7$-1 bits sans corrélation initiale. La propagation sur une distance de 20,000 km est calculée à l'aide de l'équation non-linéaire de Schroedinger via la méthode des incréments en analyse de Fourier.

Les courbes NR montrent le facteur de qualité des quatre canaux sans régénération ; les courbes A,B,C,D montrent le facteur de qualité des quatre canaux avec régénération synchrone selon la méthode de l'invention. On constate l'amélioration sensible dans le cas avec régénération, et on voit que dans l'autre cas, la liaison ne peut être considérée comme satisfaisante au delà de 4 ou 5 Mm. En revanche, en utilisant la méthode de l'invention, le facteur de qualité reste tout à fait acceptable même au-delà de 20,000 km. Nous attribuons la performance relativement médiocre du premier canal A aux collisions entre solitons qui sont sensiblement plus nombreux pour ce canal. La meilleure performance est constatée pour le canal D, qui souffre le nombre le plus réduit de collisions.

Les diagrammes de l'oeil à 20,000 km montrés pour les quatre canaux montrent que le bruit d'intensité est responsable pour la dégradation de performance sur le canal A, par rapport au canal D. En effet, la gigue temporelle Gordon-Haus présente à l'arrivée, en plus des effets de collision entre solitons et les interactions WDM, sont converties en bruit d'amplitude à la sortie du régénérateur.

L'erreur maximale entre les canaux A et D, à une distance de $Z_{Rein}$ , est trouvée par le calcul : $\delta\tau_{73} = 1.39$ ps. Cette erreur est considérée comme insignifiante, et n'influe pas sur l'efficacité de la modulation synchrone.

Dans le cas où la pente de dispersion est nulle (D'($\lambda$)=0 dans une région spectrale d'intérêt) ou bien compensée (D'$_{0,eff} = 0$) , la synchronication des canauxest donné par la condition $\Delta\lambda = T_{bit}/Z_R D$ où D est la dispersion constante dans la région d'intérêt (soit, dans le cas de tronçons multiples, $D = D_{eff}$ = constante avec

$$\Delta\lambda_{eff} = \frac{\Sigma \, \Delta L_k \, D(\lambda_k)}{\Sigma \, \Delta \, L_k}$$

Noter que dans ce dernier cas (D' = 0, D'$_{0,eff} = 0$), la position du peigne de longueurs d'ondes dans la region spectrale d'intérêt est indifférente.

Le dispositif de l'invention a été décrit en faisant référence à quelques exemples seulement de réalisations utilisant tels ou tels paramètres d'un système WDM, avec quelques dispositifs de l'art connu pour constituer un système WDM régénéré.

## Revendications

1. Méthode de régénération en ligne de signaux optiques se propageant sur une fibre optique entre un émetteur et un récepteur, lesdits signaux ayant la forme d'un train de bits représentés par des solitons qui sont caractérisés notamment par une longueur d'onde de propagation et un rythme de bits , comprenant les étapes suivantes :

- . l'amplification dudit signal optique à régénérer afin de compenser des pertes éventuelles ;
- . le prélèvement d'une partie du signal optique à régénérer via un coupleur optique couplé à ladite fibre ;
- . la récupération d'un signal d'horloge à partir dudit train de bits dans ladite partie prélevée ;
- . l'application dudit signal d'horloge, via un déphasage approprié, à un modulateur optique afin d'obtenir la

EP 0 786 877 B1

modulation synchrone dudit signal optique à régénérer ;

. le filtrage spectral des solitons dudit signal optique à régénérer après ladite modulation synchrone ;

**caractérisée en ce que**

lesdits solitons sont caractérisés par une pluralité **m** de longueurs d'onde de propagation, qui se trouvent dans une bande spectrale ayant des extrémités $\lambda_1$ et $\lambda_n$, respectivement la plus petite et la plus grande des longueurs d'onde de ladite pluralité ;

ladite récupération d'un signal d'horloge s'effectue à partir d'une longueur d'onde $\lambda_k$ comprise entre les longueurs d'onde $\lambda_1$ et $\lambda_n$ ; tel que $\tau_g(\lambda_k)Z_R = kT$

**et en ce que**

ladite régénération est effectuée à une distance $Z_R$ entre ledit émetteur et ledit modulateur optique, ou entre deux modulateurs successifs, ladite distance $Z_R$ étant choisie telle que son produit avec la différence de temps d'arrivée $\delta\tau_g = \tau_g(\lambda_n) - \tau_g(\lambda_1)$ satisfasse la condition :

$$\left[kT - T\!/\!4\right] < \delta\tau_g \ Z_R < \left[kT + T\!/\!4\right]$$

où k est entier et T est le temps bit, pour $Z_R$ en km, $\delta\tau_g$ en ps.km$^{-1}$.

2. Méthode selon la revendication 1, **caractérisée en ce que** ladite distance $Z_R$ est choisie telle que son produit avec la différence de temps de groupe $\delta\tau_g = \tau_g(\lambda_n) - \tau_g(\lambda_1)$ satisfasse la condition :

$$\left[kT - T\!/\!N\right] < \delta\tau_g \ Z_R < \left[kT + T\!/\!N\right]$$

où N > 4.

3. Méthode de régénération en ligne de signaux optiques se propageant sur une fibre optique entre un émetteur et un récepteur, lesdits signaux ayant la forme d'un train de bits représentés par des solitons qui sont caractérisés notamment par une longueur d'onde de propagation et un rythme de bits , comprenant les étapes suivantes :

. l'amplification dudit signal optique à régénérer afin de compenser des pertes éventuelles ;

. le prélèvement d'une partie du signal optique à régénérer via un coupleur optique couplé à ladite fibre ;

. la récupération d'un signal d'horloge à partir dudit train de bits dans ladite partie prélevée ;

. l'application dudit signal d'horloge, via un déphasage approprié, à un modulateur optique afin d'obtenir la modulation synchrone dudit signal optique à régénérer ;

. le filtrage spectral des solitons dudit signal optique à régénérer après ladite modulation synchrone ;

**caractérisée en ce que**

lesdits solitons sont caractérisés par une pluralité **m** de longueurs d'onde de propagation, qui sont choisies parmi **n** longueurs d'onde $\lambda_1,...\lambda_n$ qui se trouvent dans une bande spectrale ayant des extrémités $\lambda_1$ et $\lambda_n$, respectivement la plus petite et la plus grande des longueurs d'onde de ladite pluralité ;

ladite récupération d'un signal d'horloge s'effectue à partir d'une longueur d'onde $\lambda_k$ comprise entre les longueurs d'onde $\lambda_1$ et $\lambda_n$ ; tel que $\tau_g(\lambda_k)Z_R = kT$

**et en ce que**

ladite régénération est effectuée à une distance $Z_R$ entre ledit émetteur et ledit modulateur optique, ou entre deux modulateurs successifs, avec $\lambda_j - \lambda_{j-1} = \Delta\lambda$, $\forall j > 0$ , j entier, et

$$\lambda_1 - \lambda_0 = \frac{\Delta\lambda}{2} = \sqrt{\frac{T_{bit}}{4\,Z_R\,D'_0}} \ ,$$

où $\lambda_0$ est la longueur d'onde de dispersion nulle dans le cas où $D_0 \neq 0$ et $\Delta\lambda = T_{bit}/Z_R D$ dans le cas où $D' = 0$ , $D$ = constante.

4. Méthode selon l'une quelconque des revendications précédentes, **caractérisée en ce que** ladite fibre optique comprend une pluralité de tronçons de fibre, chaque tronçon étant caractérisé en partie par une longueur et par une valeur de la dispersion chromatique, ladite méthode comprenant en outre la gestion de dispersion desdits tronçons de fibre.

5. Système de transmission optique de signaux ayant la forme d'un train de bits représentés par des solitons qui sont caractérisés notamment par une longueur d'onde de propagation et un rythme de bits , ledit système comprenant au moins un émetteur et un récepteur ainsi qu'une fibre optique reliant les deux ; ledit système comprenant en outre au moins un dispositif de régénération optique comprenant un circuit de récupération d'horloge et un modulateur optique ainsi qu'un filtre spectral ; ledit système étant **caractérisé en ce que** :

ledit émetteur émet des solitons sur une pluralité de longueurs d'onde se trouvant dans une bande spectrale ayant des extrémités $\lambda_1$ et $\lambda_n$, respectivement la plus petite et la plus grande des longueurs d'onde de ladite pluralité ; lesdites longueurs d'onde différentes étant associées respectivement à des temps de groupe différents $\tau_g(\lambda_1), \tau_g(\lambda_n)$, ces temps de groupe étant caractérisés par une différence de temps de groupe $\delta\tau_g = \tau_g(\lambda_n) - \tau_g(\lambda_1)$ ;
**et en ce que** ledit dispositif de régénération optique est disposé à une distance $Z_R$ entre ledit émetteur et ledit modulateur optique, ou entre deux modulateurs successifs, ladite distance $Z_R$ étant choisie telle que son produit avec la différence de temps de groupe $\delta\tau_g = \tau_g(\lambda_n) - \tau_g(\lambda_1)$ satisfasse la condition :

$$\left[ kT - \frac{T}{4} \right] < \delta\tau_g\ Z_R < \left[ kT + \frac{T}{4} \right]$$

où k est entier et T est le temps bit, pour $Z_R$ en km, $\delta\tau_g$ en ps.km$^{-1}$.

6. Système selon la revendication 5, **caractérisé en ce que** ladite distance $Z_R$ est choisie telle que son produit avec la différence de temps de groupe $\delta\tau_g = \tau_g(\lambda_n) - \tau_g(\lambda_1)$ satisfasse la condition :

$$\left[ kT - \frac{T}{N} \right] < \delta\tau_g\ Z_R < \left[ kT + \frac{T}{N} \right]$$

où N > 4 .

7. Système de transmission optique de signaux ayant la forme d'un train de bits représentés par des solitons qui sont caractérisés notamment par une longueur d'onde de propagation et un rythme de bits , ledit système comprenant au moins un émetteur et un récepteur ainsi qu'une fibre optique reliant les deux ; ledit système comprenant en outre au moins un dispositif de régénération optique comprenant un circuit de récupération d'horloge et un modulateur optique ainsi qu'un filtre spectral ; ledit système étant **caractérisé en ce que** :

ledit émetteur émet des solitons sur une pluralité de longueurs d'onde se trouvant dans une bande spectrale ayant des extrémités $\lambda_1$ et $\lambda_n$, respectivement la plus petite et la plus grande des longueurs d'onde de ladite pluralité ; lesdites longueurs d'onde différentes étant associées respectivement à des temps de groupe différents $\tau_g(\lambda_1), \tau_g(\lambda_n)$, ces temps de groupe étant caractérisés par une différence de temps de groupe $\delta\tau_g = \tau_g(\lambda_n) - \tau_g(\lambda_1)$ ;
**et en ce que** ledit dispositif de régénération optique est disposé à une distance $Z_R$ entre ledit émetteur et ledit modulateur optique, ou entre deux modulateurs successifs,
**et en ce que** ledit système WDM utilise une pluralité **m** de canaux WDM choisis parmi **n** canaux ($c_1, \dots c_n$)

ayant les longueurs d'onde respectives $\lambda_1$, $\lambda_2$, ... $\lambda_n$, avec $\lambda_j - \lambda_{j-1} = \Delta\lambda$, $\forall$ j > 0, j entier, et

$$\lambda_1 - \lambda_0 = y \sqrt{\frac{T_{bit}}{Z_R D'_0}}$$

et

$$\Delta\lambda = x(\lambda_1 - \lambda_0)$$

où $\lambda_0$ est la longueur d'onde de dispersion nulle et

$$x = \frac{2M}{2N - M}, \quad y = \frac{2NM}{2\sqrt{M}}$$

soit $N = xy^2(x + 2)/2$ et $M = x^2 y^2$ avec N, M entiers non nuls et $2N > M \geq 1$.

8. Système selon la revendication 7, caractérisé en ce que N = M = 1, soit x = 2, y = 1/2, et

$$\lambda_1 - \lambda_0 = \frac{\Delta\lambda}{2} = \sqrt{\frac{T_{bit}}{4 Z_R D'_0}},$$

où $\lambda_0$ est la longueur d'onde de dispersion nulle dans le cas où $D_0 \neq 0$ et $\Delta\lambda = T_{bit}/Z_R D$ dans le cas où D' = 0, où D = constante.

9. Système selon l'une quelconque des revendications 5 à 8, **caractérisé en ce qu'**il comprend une pluralité de q tronçons de fibre, chaque tronçon étant caractérisé en partie par une longueur et par une valeur de la dispersion chromatique, et la méthode selon l'une quelconque des revendications 1 à 4 comprend en outre la gestion de dispersion desdits tronçons de fibre.

10. Système selon la revendication 9, caractérisé en ce que **q** tend vers l'infini, la longueur de chaque tronçon tend vers l'infinitesimale, la dispersion chromatique varie de façon continue, et la dispersion effective est calculée par l'integrale.

11. Système selon l'une quelconque des revendications précédentes, caractérisé en ce que la pente effective de dispersion est nulle : $D_{0,eff} = 0$, avec $\Delta\lambda = T_{bit}/Z_R D$.

12. Systéme selon la revendication 11, caractérisé en ce que la pente de dispersion est effectivement nulle :

$$D' = 0, \text{ avec } \Delta\lambda = T_{bit}/Z_R D.$$

13. Dispositif de régénération de solitons comprenant un circuit de récupération d'horloge RH synchronisé au rythme bit d'un signal soliton sur un canal de transmission via un coupleur optique ; des moyens d'accord de phase $\Phi$, par exemple une ligne à retard optique ; et un modulateur d'intensité et/ou de phase piloté par le signal d'horloge RF

ledit dispositif étant **caractérisé en ce qu'**il comprend en outre un filtre optique guidant cannelé qui sert à remettre les impulsions solitons d'une pluralité de longueurs d'onde dans la même position temporelle.

**Claims**

1. A method of in-line regeneration of optical signals propagating over an optical fiber between a transmitter and a receiver, said signals being in the form of a stream of bits represented by solitons characterized in particular by a propagation wavelength and by a bit rate, the method comprising the following steps:

- said optical signal to be regenerated is amplified to compensate for possible losses;
- a portion of the optical signal to be regenerated is taken off via an optical coupler coupled to said fiber;
- the clock signal of said bit stream is recovered from said taken-off portion;
- said clock signal is applied via appropriate phase shifting to an optical modulator in order to provide synchronous modulation of said optical signal to be regenerated; and
- the solitons of said optical signal to be regenerated are subjected to spectral filtering after said synchronous modulation;

the method being **characterized in that**

said solitons are characterized by a plurality **m** of propagation wavelengths lying in a spectrum band having ends $\lambda_1$ and $\lambda_n$ which are respectively the shortest and the longest wavelengths of said plurality; and said clock signal is recovered from a wavelength $\lambda_k$ lying between the wavelengths $\lambda_1$ and $\lambda_n$, such that $\tau_g(\lambda_k)$ $Z_R = kT$;

**and in that**

said regeneration is performed at a distance $Z_R$ between said transmitter and said optical modulator, or between two successive modulators, where said distance $Z_R$ is selected so that its product when multiplied by the arrival time difference $\delta\tau_g = \tau_g(\lambda_n) - \tau_g(\lambda_1)$ satisfies the following condition:

$$[kT - T/4] < \delta\tau_g Z_R < [kT + T/4]$$

where $\underline{k}$ is integer and T is the bit time, for $Z_R$ in km and $\delta\tau_g$ in ps.km$^{-1}$.

2. A method according to claim 1, **characterized in that** said distance' $Z_R$ is selected so that its product when multiplied by the group time difference $\delta\tau_g = \tau_g(\lambda_n) - \tau_g(\lambda_1)$ satisfies the following condition:

$$[kT - T/N] < \delta\tau_g Z_R < [kT + T/N]$$

where N > 4.

3. A method of in-line regeneration of optical signals propagating over an optical fiber between a transmitter and a receiver, said signals being in the form of a stream of bits represented by solitons characterized in particular by a propagation wavelength and by a bit rate, the method comprising the following steps:

- said optical signal to be regenerated is amplified to compensate for possible losses;
- a portion of the optical signal to be regenerated is taken off via an optical coupler coupled to said fiber;
- the clock signal of said bit stream is recovered from said taken-off portion;
- said clock signal is applied via appropriate phase shifting to an optical modulator in order to provide synchronous modulation of said optical signal to be regenerated; and
- the solitons of said optical signal to be regenerated are subjected to spectral filtering after said synchronous modulation;

the method being **characterized in that**

said solitons are characterized by a plurality $\underline{m}$ of propagation wavelengths selected from $\underline{n}$ wavelengths $\lambda_1$, ..., $\lambda_n$ lying in a spectrum band having ends $\lambda_1$ and $\lambda_n$, which are respectively the shortest and the longest wavelengths of said plurality; said clock signal is recovered from a wavelength $\lambda_k$ lying between the wavelengths $\lambda_1$ and $\lambda_n$, such that $\tau_g(\lambda_k)$ $Z_R = kT$;

**and in that**

said regeneration is performed at a distance $Z_R$ between said transmitter and said optical modulator, or between two successive modulators, where $\lambda_j - \lambda_{j-1} = \Delta\lambda$, $\forall j > 0$, for integer $\underline{j}$, and

$$\lambda_1 - \lambda_0 = \frac{\Delta\lambda}{2} = \left(\frac{T_{bit}}{4 Z_R D'_0}\right)^{\frac{1}{2}}$$

where $\lambda_0$ is the zero dispersion wavelength
when $D'_0 \neq 0$, and $\Delta\lambda = T_{bit}/Z_R D$ when $D'_0 = 0$,
$D$ = constant.

4. A method according to any preceding claim, **characterized in that** said optical fiber comprises a plurality of fiber lengths, each length being characterized in part by a length and by a value for chromatic dispersion, said method further comprising managing the dispersion of said lengths of fiber.

5. An optical transmission system for transmitting optical signals in the form of bit streams represented by solitons characterized in particular by a propagation wavelength and a bit rate, said system including at least a transmitter and a receiver, plus an optical fiber interconnecting them; said system further comprising at least one optical regenerator apparatus including a clock recovery circuit and an optical modulator together with a spectral filter;
said system being **characterized in that**:

said transmitter transmits solitons at a plurality of wavelengths lying in a spectrum band having ends $\lambda_1$ and $\lambda_n$, respectively being the shortest and the longest wavelengths of said plurality;
said different wavelengths being associated with respective different group propagation times $\tau_g(\lambda_1)$, $\tau_g(\lambda_n)$, said group propagation times being characterized by a group propagation time difference $\delta\tau_g = \tau_g(\lambda_n) - \tau_g(\lambda_1)$;

**and in that**

said optical regenerator apparatus is disposed at a distance $Z_R$ between said transmitter and said optical modulator, or between two successive modulators, said distance $Z_R$ being selected such that its product when multiplied by the group propagation time difference $\delta\tau_g = \tau_g(\lambda_n) - \tau_g(\lambda_1)$ satisfies the condition:

$$[kT - T/4] < \delta\tau_g Z_R < [kT + T/4]$$

where $\underline{k}$ is integer and T is the bit time, for $Z_R$ in km and $\delta\tau_g$ in ps.km$^{-1}$.

6. A system according to claim 5, **characterized in that** said distance $Z_R$ is selected so that its product when multiplied by the group propagation time difference $\delta\tau_g = \tau_g(\lambda_n) - \tau_g(\lambda_1)$ satisfies the condition:

$$[kT - T/N] < \delta\tau_g Z_R < [kT + T/N]$$

where $N > 4$.

7. An optical transmission system for transmitting optical signals in the form of bit streams represented by solitons characterized in particular by a propagation wavelength and by a bit rate, said system including at least a transmitter and a receiver, plus an optical fiber interconnecting them; said system further comprising at least one optical regenerator apparatus including a clock recovery circuit and an optical modulator together with a spectral filter;
said system being **characterized in that**:

said transmitter transmits solitons at a plurality of wavelengths lying in a spectrum band having ends $\lambda_1$ and $\lambda_n$, respectively being the shortest and the longest wavelengths of said plurality;
said different wavelengths being associated with respective different group propagation times $\tau_g(\lambda_1)$, $\tau_g(\lambda_n)$, said group propagation times being characterized by a group propagation time difference $\delta\tau_g = \tau_g(\lambda_n) - \tau_g(\lambda_1)$;

**and in that**

said optical regenerator apparatus is disposed at a distance $Z_R$ between said transmitter and said optical modulator, or between two successive modulators;

**and in that**

said WDM system uses a plurality m of WDM channels selected from $\underline{n}$ channels ($c_1$, ..., $c_n$) having respective wavelengths $\lambda_1$, $\lambda_2$, ..., $\lambda_n$, where $\lambda_j - \lambda_{j-1} = \Delta\lambda$, $\forall\, j > 0$, for integer j, and

$$\lambda_1 - \lambda_0 = y \left( \frac{T_{bit}}{Z_R D'_0} \right)^{\!\frac{1}{2}}$$

and $\Delta\lambda = x(\lambda_1 - \lambda_0)$
where $\lambda_0$ is the zero dispersion wavelength, and

$$x = \frac{2M}{2N - M}, \qquad y = \frac{2N\,M}{2\sqrt{M}}$$

where $N = xy^2(x + 2)/2$ and $M = x^2y^2$ with N, M being non-zero integers and $2N > M \geq 1$.

8. A system according to claim 7, **characterized in that** $N = M = 1$, where $x = 2$, $y = 1/2$, and

$$\lambda_1 - \lambda_0 = \frac{\Delta\lambda}{2} = \left( \frac{T_{bit}}{4 Z_R D'_0} \right)^{\!\frac{1}{2}}$$

where $\lambda_0$ is the zero dispersion wavelength when $D'_0 \neq 0$ and $\Delta\lambda = T_{bit}/Z_R D$ when $D' = 0$, where D = constant.

9. A system according to any one of claims 5 to 8, **characterized in that** it comprises a plurality $\underline{q}$ of fiber lengths, each length being characterized in part by a length and by a value for chromatic dispersion, and the method according to any one of claims 1 to 4 further includes management of the dispersion of said fiber lengths.

10. A system according to claim 9, **characterized in that** $\underline{q}$ tends towards infinity, the length of each fiber length tends towards the infinitesimal, the chromatic dispersion varies continuously, and the effective dispersion is calculated by the integral.

11. A system according to any preceding claim, **characterized in that** the effective dispersion gradient is zero: $D'_{0eff} = 0$, with $\Delta\lambda = T_{bit}/Z_R D$.

12. A system according to claim 11, **characterized in that** the dispersion gradient is effectively zero:

$$D' = 0, \text{ with } \Delta\lambda = T_{bit}/Z_R D.$$

13. Apparatus for generating solitons, comprising a clock recovery circuit RH synchronized to the bit rate of a soliton signal on a transmission channel via an optical coupler; means for matching phase $\Phi$, e.g. an optical delay line; and an intensity and/or phase modulator driven by the clock signal RF,
   said apparatus being **characterized in that**

   it further includes an optical channel guiding filter serving to put the soliton pulses at a plurality of wavelengths into the same time position.

**Patentansprüche**

1. Verfahren zum Inline-Regenerieren von optischen Signalen, die sich auf einer optischen Faser zwischen einem Sender und einem Empfänger ausbreiten, wobei die Signale die Form einer Folge von Bits haben, die durch Solitonen dargestellt sind, die insbesondere durch eine Ausbreitungswellenlänge und einen Bittakt gekennzeichnet sind, welches die folgenden Schritte umfaßt:

   . die Verstärkung des zu regenerierenden optischen Signals, um eventuelle Verluste auszugleichen;

. die Abnahme eines Teils des zu regenerierenden optischen Signals über einen an die Faser gekoppelten optischen Koppler;
. die Wiederherstellung eines Taktsignals ausgehend von der Bitfolge im abgenommenen Teil;
. die Anlegung des Taktsignals über eine geeignete Phasenverschiebung an einen optischen Modulator, um die synchrone Modulation des zu regenerierenden optischen Signals zu erhalten;
. die spektrale Filterung der Solitonen des zu regenerierenden optischen Signals nach der synchronen Modulation;

dadurch gekennzeichnet, daß

die Solitonen durch eine Vielzahl m von Ausbreitungswellenlängen gekennzeichnet sind, die in einem Spektralband mit den Endpunkten $\lambda_1$ und $\lambda_n$, der kleinsten bzw. der größten der Wellenlängen der Vielzahl, liegen;
die Wiederherstellung eines Taktsignals ausgehend von einer Wellenlänge $\lambda_k$ erfolgt, die zwischen den Wellenlängen $\lambda_1$ und $\lambda_n$ liegt, so daß $\tau_g(\lambda_k)Z_R = kT$ und daß
die Regenerierung bei einer Entfernung $Z_R$ zwischen dem Sender und dem optischen Modulator oder zwischen zwei aufeinanderfolgenden Modulatoren ausgeführt wird, wobei die Entfernung $Z_R$ so ausgewählt wird, daß ihr Produkt mit der Differenz der Ankunftszeit $\delta\tau_g = \tau_g(\lambda_n) - \tau_g(\lambda_1)$ für $Z_R$ in km, $\delta\tau_g$ in ps.km$^{-1}$ die Bedingung erfüllt:

$$\left[kT - T\!\!\Big/\!\!4\right] < \delta\tau_k \; Z_R < \left[kT + T\!\!\Big/\!\!4\right],$$

worin k eine ganze Zahl ist und T die Bitzeit ist.

2. Verfahren nach Anspruch 1, dadurch gekennzeichnet, daß die Entfernung $Z_R$ derart gewählt wird, daß ihr Produkt mit der Gruppenzeitendifferenz $\delta\tau_g = \tau_g(\lambda_n) - \tau_g(\lambda_1)$ die Bedingung erfüllt:

$$\left[kT - T\!\!\Big/\!\!N\right] < \delta\tau_k \; Z_R < \left[kT + T\!\!\Big/\!\!N\right],$$

worin N > 4.

3. Verfahren zum Inline-Regenerieren von optischen Signalen, die sich auf einer optischen Faser zwischen einem Sender und einem Empfänger ausbreiten, wobei die Signale die Form einer Folge von Bits haben, die durch Solitonen dargestellt sind, die insbesondere durch eine Ausbreitungswellenlänge und einen Bittakt gekennzeichnet sind, welches die folgenden Schritte umfaßt:

. die Verstärkung des zu regenerierenden optischen Signals, um eventuelle Verluste auszugleichen;
. die Abnahme eines Teils des zu regenerierenden optischen Signals über einen an die Faser gekoppelten optischen Koppler;
. die Wiederherstellung eines Taktsignals ausgehend von der Bitfolge im abgenommenen Teil;
. die Anlegung des Taktsignals über eine geeignete Phasenverschiebung an einen optischen Modulator, um die synchrone Modulation des zu regenerierenden optischen Signals zu erhalten;
. die spektrale Filterung der Solitonen des zu regenerierenden optischen Signals nach der synchronen Modulation;

dadurch gekennzeichnet, daß

die Solitonen durch eine Vielzahl m von Ausbreitungswellenlängen gekennzeichnet sind, die aus n Wellenlängen $\lambda_1,...\lambda_n$ ausgewählt sind, die in einem Spektralband mit den Endpunkten $\lambda_1$ und $\lambda_n$, der kleinsten bzw. der größten der Wellenlängen der Vielzahl, liegen;
die Wiederherstellung eines Taktsignals ausgehend von einer Wellenlänge $\lambda_k$ erfolgt, die zwischen den Wellenlängen $\lambda_1$ und $\lambda_n$ liegt; so daß $\tau_g(\lambda_k)Z_R = kT$ und daß
die Regenerierung bei einer Entfernung $Z_R$ zwischen dem Sender und dem optischen Modulator oder zwischen zwei aufeinanderfolgenden Modulatoren mit $\lambda_j - \lambda_{j-1} = \Delta\lambda$, $\forall\, j > 0$, j eine ganze Zahl ist, und

$$\lambda_1 - \lambda_0 = \frac{\Delta\lambda}{2} = \sqrt{\frac{T_{bit}}{4\,Z_R\,D'_0}}\ ,$$

worin $\lambda_0$ die Wellenlänge der Streuung Null in dem Falle ist, in dem $D_0 \neq 0$ ist, und $\Delta\lambda = T_{bit}/Z_R D$ in dem Falle, in dem $D' = 0$, wobei $D = $ konstant.

4. Verfahren nach einem der vorhergehenden Ansprüche, dadurch gekennzeichnet, daß die optische Faser eine Vielzahl von Faserabschnitten umfaßt, wobei jeder Abschnitt teilweise durch eine Länge und durch einen Wert der chromatischen Streuung gekennzeichnet ist, wobei das Verfahren außerdem die Steuerung der Streuung der Faserabschnitte umfaßt.

5. Optisches Übertragungssystem für Signale, die die Form einer Folge von Bits haben, die durch Solitonen dargestellt sind, die insbesondere durch eine Ausbreitungswellenlänge und einen Bittakt gekennzeichnet sind, wobei das System wenigstens einen Sender und einen Empfänger sowie eine optische Faser umfaßt, die die beiden verbindet; wobei das System außerdem wenigstens eine optische Regenerierungseinrichtung umfaßt, die eine Schaltung zur Wiederherstellung des Taktes und einen optischen Modulator sowie ein Spektralfilter umfaßt; dadurch gekennzeichnet, daß

der Sender Solitonen auf einer Vielzahl von Wellenlängen sendet, die in einem Spektralband mit den Endpunkten $\lambda_1$ und $\lambda_n$, der kleinsten bzw. der größten der Wellenlängen der Vielzahl, liegen;
wobei die verschiedenen Wellenlängen jeweils zu verschiedenen Gruppenzeiten $\tau_g(\lambda_1)$, $\tau_g(\lambda_n)$ gehören, wobei diese Gruppenzeiten durch eine Gruppenzeitendifferenz $\delta\tau_g = \tau_g(\lambda_n) - \tau_g(\lambda_1)$ gekennzeichnet sind;
und daß die optische Regenerierungseinrichtung bei einer Entfernung $Z_R$ zwischen dem Sender und dem optischen Modulator oder zwischen zwei aufeinanderfolgenden Modulatoren angeordnet ist, wobei die Entfernung $Z_R$ derart gewählt ist, daß ihr Produkt mit der Gruppenzeitendifferenz $\delta\tau_g = \tau_g(\lambda_n) - \tau_g(\lambda_1)$ für $Z_R$ in km, $\delta\tau_g$ in ps.km$^{-1}$ die Bedingung erfüllt:

$$\left[ kT - T\!\!\Big/\!\!4 \right] < \delta\tau_g\, Z_R < \left[ kT + T\!\!\Big/\!\!4 \right],$$

worin k eine ganze Zahl und T die Bitzeit ist.

6. System nach Anspruch 5, dadurch gekennzeichnet, daß die Entfernung $Z_R$ so gewählt ist, daß ihr Produkt mit der Differenz der Gruppenzeiten $\delta\tau_g = \tau_g(\lambda_n) - \tau_g(\lambda_1)$ die Bedingung erfüllt:

$$\left[ kT - T\!\!\Big/\!\!N \right] < \delta\tau_g\, Z_R < \left[ kT + T\!\!\Big/\!\!N \right],$$

worin $N > 4$.

7. Optisches Übertragungssystem für Signale, die die Form einer Folge von Bits haben, die durch Solitonen dargestellt sind, die insbesondere durch eine Ausbreitungswellenlänge und einen Bittakt gekennzeichnet sind, wobei das System wenigstens einen Sender und einen Empfänger sowie eine optische Faser umfaßt, die die beiden verbindet; wobei das System außerdem wenigstens eine optische Regenerierungseinrichtung umfaßt, die eine Schaltung zur Wiederherstellung des Taktes und einen optischen Modulator sowie ein Spektralfilter umfaßt; dadurch gekennzeichnet, daß

der Sender Solitonen auf einer Vielzahl von Wellenlängen sendet, die in einem Spektralband mit den Endpunkten $\lambda_1$ und $\lambda_n$, der kleinsten bzw. der größten der Wellenlängen der Vielzahl, liegen;
wobei die verschiedenen Wellenlängen jeweils zu verschiedenen Gruppenzeiten $\tau_g(\lambda_1)$, $\tau_g(\lambda_n)$ gehören, wobei diese Gruppenzeiten durch eine Gruppenzeitendifferenz $\delta\tau_g = \tau_g(\lambda_n) - \tau_g(\lambda_1)$ gekennzeichnet sind;
und daß die optische Regenerierungseinrichtung bei einer Entfernung $Z_R$ zwischen dem Sender und dem optischen Modulator oder zwischen zwei aufeinanderfolgenden Modulatoren angeordnet ist,
und daß das WDM-System eine Vielzahl m von WDM-Kanälen verwendet, die aus n Kanälen ($c_1,...c_n$) mit den jeweiligen Wellenlängen $\lambda_1$, $\lambda_2,...,\lambda_n$ ausgewählt sind, wobei $\lambda_j - \lambda_{j-1} = \Delta\lambda$, $\forall\, j > 0$, j eine ganze Zahl ist, und

$$\lambda_1 - \lambda_0 = y \sqrt{\frac{T_{bit}}{Z_R D'_0}}$$

und

$$\Delta\lambda = x(\lambda_1 - \lambda_0)$$

worin $\lambda_0$ die Wellenlänge der Streuung Null ist und

$$x = \frac{2M}{2N - M}, \quad y = \frac{2N M}{2\sqrt{M}},$$

nämlich $N = xy^2(x + 2)/2$ und $M = x^2y^2$, wobei N, M ganze Zahlen ungleich Null sind und $2N > M \geq 1$.

8. System nach Anspruch 7, dadurch gekennzeichnet, daß N = M = 1, nämlich x = 2, y = 1/2, und

$$\lambda_1 - \lambda_0 = \frac{\Delta\lambda}{2} = \sqrt{\frac{T_{bit}}{4 Z_R D'_0}},$$

worin $\lambda_0$ die Wellenlänge der Streuung Null in dem Falle ist, in dem $D_0 \neq 0$, und $\Delta\lambda = T_{Bit}/Z_R D$ in dem Falle, in dem D' = 0, worin D = konstant.

9. System nach einem der Ansprüche 5 bis 8, dadurch gekennzeichnet, daß es eine Vielzahl von q Faserabschnitten umfaßt, wobei jeder Abschnitt teilweise durch eine Länge und durch einen Wert der chromatischen Streuung gekennzeichnet ist und das Verfahren nach einem der Ansprüche 1 bis 4 außerdem die Steuerung der Streuung der Faserabschnitte umfaßt.

10. System nach Anspruch 9, dadurch gekennzeichnet, daß q nach unendlich strebt, die Wellenlänge jedes Abschnittes nach dem unendlich Kleinen strebt, die chromatische Streuung kontinuierlich variiert und die effektive Streuung durch das Integral berechnet wird.

11. System nach einem der vorhergehenden Ansprüche, dadurch gekennzeichnet, daß die effektive Steigung der Streuung Null ist: $D_{0,eff} = 0$, wobei $\Delta\lambda = T_{bit}/Z_R D$.

12. System nach Anspruch 11, dadurch gekennzeichnet, daß die Steigung der Streuung effektiv Null ist:

D' = 0, wobei $\Delta\lambda = T_{bit}/Z_R D$.

13. Regenerierungseinrichtung für Solitonen, die eine Schaltung RH zur Wiederherstellung des Taktes, der mit dem Bittakt eines Solitonsignals auf dem Übertragungskanal über einen optischen Koppler synchronisiert ist, Mittel zur Einstellung der Phase $\Phi$, beispielsweise eine Leitung mit optischer Verzögerung, und einen Modulator für die Intensität und/oder die Phase umfaßt, der vom Taktsignal RF gesteuert wird,
dadurch gekennzeichnet, daß sie außerdem ein geripptes, führendes optisches Filter umfaßt, das dazu dient, die Solitonpulse mit einer Vielzahl von Wellenlängen in die gleiche zeitliche Position zu verlegen.

# FIG. 1

# FIG. 2

FIG. 3

EP 0 786 877 B1

FIG. 4

# FIG.5

EP 0 786 877 B1